# EUROPÄISCHE PATENTSCHRIFT

(11) **EP 2 338 693 B1**
(45) Veröffentlichungstag und Bekanntmachung des Hinweises auf die Patenterteilung: **06.06.2012**
(21) Anmeldenummer: 09015939.3
(22) Anmeldetag: 23.12.2009
(51) Int. Cl.: B44C 5/04

(54) **Verfahren und Vorrichtung zum Veredeln einer Holzwerkstoffplatte**
Method and device for finishing a composite wood board
Procédé et dispositif destinés à l'affinement d'une plaque en matériau dérivé du bois

(43) Veröffentlichungstag der Anmeldung: 29.06.2011
(73) Patentinhaber: Flooring Technologies Ltd., Pieta PTA 9044 (MT)
(72) Erfinder: Oldorff, Frank, 19057 Schwerin (DE)
(74) Vertreter: Rehmann, Thorsten

(56) Entgegenhaltungen:
- EP-A2- 1 454 763
- EP-A2- 1 977 909
- WO-A1-2005/116361
- DE-A1-102007 003 746
- US-A1- 2007 207 290

## Beschreibung

Die Erfindung betrifft ein Verfahren zum Veredeln einer Holzwerkstoffplatte, die an mindestens einer Oberseite und/oder einer Unterseite ein Dekor aufweist.

Derartige Holzwerkstoffplatten sind weit verbreitet und werden auf vielen verschiedenen Gebieten eingesetzt. Ein besonders großes Einsatzgebiet ist die Verwendung als Fußbodenpaneel. Insbesondere bei dieser Verwendung sind die mit dem Dekor versehenen Holzwerkstoffplatten einer immensen Belastung insbesondere durch Begehen ausgesetzt. Damit sie diesen Belastungen standhalten muss die Dekorschicht mit einer Schutzschicht abgedeckt werden. Diese besteht meist aus einem Kunstharz, beispielsweise Melaminharz, dem verschiedene Zusatzstoffe beigemischt wurden. Durch die verschiedenen auf die Holzwerkstoffplatte aufgebrachten Schichten kommt es zu Zugspannungen, die zu einer Schüsselung der Holzwerkstoffplatte führen können. Deshalb müssen sowohl Ober- als auch Unterseite der Holzwerkstoffplatte beschichtet werden um diese Kräfte an beiden Seiten gleichmäßig auftreten zu lassen und so eine Schüsselung zu vermeiden.

Der Auftrag der Kunstharzschicht auf die Holzwerkstoffplatte kann auf verschiedenste Weise erfolgen. So ist beispielsweise bekannt, das Kunstharz als Granulat bzw. Pulver auf die zu beschichtende Seite der Holzwerkstoffplatte aufzubringen und gegebenenfalls vorgesehene Zusatzstoffe einzustreuen. Beim abschließenden Verpressen unter Druck- und Temperatureinfluss schmilzt das aufgetragene Pulver und bildet eine homogene Schicht. Bei diesem Verfahren ist eine beidseitige Beschichtung der Holzwerkstoffplatte naturgemäß nicht möglich, da das aufgestreute Pulver lediglich auf der Oberfläche der Holzwerkstoffplatte liegt und erst beim Verpressen mit dieser verbunden wird.

Aus der EP 1 454 763 A2 ist es bekannt, eine Schutzschicht aus Melaminharz auf das Dekor auf der Oberseite einer Holzwerkstoffplatte aufzubringen. Gleichzeitig soll auf die Unterseite der Holzwerkstoffplatte ebenfalls eine Schutzschicht aus Melaminharz aufgebracht werden. Dabei sollen die aufgebrachten Harzschichten beim Verpressen schmelzen und so das Dekor einschließen.

In der EP 2 098 304 A2 ist die Verwendung von flüssigem Harz beschrieben, das sowohl auf die Ober- als auch auf die Unterseite der Holzwerkstoffplatte aufgebracht wird.

Von dieser Problemstellung ausgehend, soll das beschriebene Verfahren zum Veredeln einer Holzwerkstoffplatte verbessert werden.

Die Problemlösung erfolgt durch ein gattungsgemäßes Verfahren mit folgenden Schritten:
a) Reinigen der Oberseite und der Unterseite der Holzwerkstoffplatte,
b) Aufbringen einer ersten oberen Harzschicht, die Korundpartikel enthält, auf die Oberseite und einer ersten unteren Harzschicht auf die Unterseite der Holzwerkstoffplatte,
c) Trocknen der ersten oberen Harzschicht und der ersten unteren Harzschicht auf eine Restfeuchte von 3 % bis 6 %,
d) Aufbringen einer zweiten oberen Harzschicht, die Zellulose enthält, auf die Oberseite und einer zweiten unteren Harzschicht auf die Unterseite der Holzwerkstoffplatte,
e) Trocknen der zweiten oberen Harzschicht und der zweiten unteren Harzschicht auf eine Restfeuchte von 3 % bis 6 %,
f) Aufbringen einer mindestens dritten oberen Harzschicht, die Glaspartikel enthält, auf die Oberseite und einer mindestens dritten unteren Harzschicht auf die Unterseite der Holzwerkstoffplatte,
g) Trocknen der dritten oberen Harzschicht und der dritten unteren Harzschicht auf eine Restfeuchte von 3% bis 6%,
h) Verpressen des Schichtaufbaus unter Druck- und Temperatureinfluss.

Durch das Reinigen der Oberseite und der Unterseite der Holzwerkstoffplatte im ersten Verfahrensschritt werden Stäube oder sonstige Verunreinigungen, die sich während der Lagerung oder vorhergehender Produktionsschritte an den betreffenden Seiten der Holzwerkstoffplatte angelagert haben, sicher entfernt. Dies ist wichtig um zu gewährleisten, dass auch sehr dünne aufzubringende Harzschichten gleichmäßig und homogen auf die Oberseite aufgebracht werden und keinerlei Unebenheiten oder Einschlüsse in diesen Schichten vorkommen.

Durch die Korundpartikel in der ersten oberen Harzschicht wird die Abriebfestigkeit dieser Schicht erhöht. Dies ist insbesondere bei der Verwendung als Fußbodenpaneel von größter Wichtigkeit um den bereits angesprochenen Belastungen, denen ein Fußbodenpaneel ausgesetzt ist, standhalten zu können. Dabei liegt das Korund beispielsweise als Mischung aus üblichen silanisierten Korunden unterschiedlicher Körnung vor und kann dem Harz einfach beigegeben werden. Auf die Unterseite der Holzwerkstoffplatte wird eine erste untere Harzschicht aufgebracht, wodurch die durch die erste obere Harzschicht auf die Holzwerkstoffplatte wirkenden Zugkräfte ausgeglichen werden. Die erste untere Harzschicht kann insbesondere eingefärbt sein. Beiden Harzschichten können Additive beigegeben sein, wie beispielsweise Härter, Netz- oder Trennmittel. Anschließend werden die erste obere Harzschicht und die erste untere Harzschicht getrocknet, um das saubere Aufbringen einer nächsten Harzschicht zu gewährleisten. Die Trocknung erfolgt beispielsweise mittels Heißluft, wobei das Harz getrocknet und die chemische Vernetzungsreaktion des Melaminharzes gestoppt wird. Dabei wird der Beschichtungsmasse Wasser entzogen und sie auf einer Restfeuchte von etwa 3 % bis 6 % eingestellt. Auch die übrigen aufgebrachten Harzschichten werden beim jeweiligen Trocknen auf diese Restfeucht gebracht.

Die Zellulose, die in der zweiten oberen Harzschicht vorhanden ist, liegt in handelsüblichen Fasern vor, die ebenfalls den aufzubringenden Harzschichten beigegeben werden können. Das in der dritten oberen Harzschicht eingebrachte Glas liegt als handelsübliche Mikroglaskugeln vor. Auch diese können einfach gelagert und in die aufzubringende Harzschicht eingebracht werden. Die auf die Unterseite der Holzwerkstoffplatte aufgebrachten Harzschichten können eingefärbt sein. Allen Harzschichten können Additive wie Härter, Netz- und Trennmittel beigegeben werden.

Durch das Trocknen auf einer Restfeuchte von 3 % bis 6 % wird der Vernetzungsprozess der aufgebrachten Harzschichten unterbunden. Beim abschließenden Verpressen unter Druck- und Temperatureinfluss schmelzen die Harzschichten wieder auf und der Vernetzungsprozess setzt sich fort. Dadurch ist gewährleistet, dass die einzelnen Harzschichten nicht nur in sich sondern auch untereinander vernetzt werden und so zu einem großen Laminat verpresst werden können. Übliche Kurztakt-Pressen arbeiten beispielsweise bei einem Druck von 30 bis 60 kg/cm², einer Temperatur an der Holzwerkstoffoberfläche von etwa 165°C und einer Presszeit von 6 bis 12 Sekunden. Dabei werden die aufgebrachten Melaminharzschichten unter Einschluss des Dekors vernetzt. Werden strukturierte Pressbleche verwendet, lassen sich zusätzlich zum Dekor auch Strukturen in die Harzschichten einprägen. Diese können weitgehend deckungsleich zum Dekor ausgebildet sein. In diesem Fall spricht man von Embossed-In-Register Strukturen.

Die dritte obere Harzschicht enthält vorzugsweise einen Anteil von 20 % Glaspartikel. Für die zweite obere Harzschicht haben sich etwa 5 % Zellulose als vorteilhaft erwiesen. Die erste obere Harzschicht enthält insbesondere 20 % Korundpartikel.

Vorteilhafterweise werden die oberen Harzschichten und die unteren Harzschichten in einer Menge von 20 bis 50 g/m² aufgetragen. Dadurch, dass die jeweils an der Ober- und Unterseite aufgebrachten Melaminharzschichten in gleicher Menge aufgetragen werden, wir gleichzeitig gewährleistet, dass die durch die aufgebrachten Schichten beim Trocknen entstehenden Zugkräfte auf die Holzwerkstoffplatte sich gegenseitig aufheben. Der auf die Unterseite der Holzwerkstoffplatte aufgebrachte Gegenzug entspricht also im Schichtaufbau und der jeweiligen Schichtdicke genau der an der Oberseite aufgebrachten Schichtfolge. Durch diese geringe Auftragsmenge von 20 bis 50 g/m² wird gleichzeitig gewährleistet, dass insbesondere an der Unterseite der Holzwerkstoffplatte keine Nasenbildung auftritt.

Die oberen Harzschichten und die unteren Harzschichten können eine 60%ige Kunstharzlösung enthalten.

Unter dem Dekor der zu veredelnden Holzwerkstoffplatte kann ein Primer und eine Grundierung aufgetragen sein. Das Dekor ist auf diese Grundierung aufgedruckt und mit einer Abdeckung abgedeckt worden. Alternativ dazu kann das Dekor in Form einer aufkaschierten Dekorpapierschicht auf die Holzwerkstoffplatte aufgebracht sein.

Eine Vorrichtung zum Veredeln einer Holzwerkstoffplatte, wobei mindestens eine Oberseite und/oder eine Unterseite der Holzwerkstoffplatte ein Dekor aufweist, umfasst erfindungsgemäß folgendes:
a) eine erste Doppelauftragsvorrichtung,
b) eine in einer Verarbeitungsrichtung hinter der ersten Doppelauftragsvorrichtung angeordnete erste Trocknungsvorrichtung,
c) eine in Verarbeitungsrichtung hinter der ersten Trocknungsvorrichtung angeordnete zweite Doppelauftragsvorrichtung,
d) eine in Verarbeitungsrichtung hinter der zweiten Doppelauftragsvorrichtung angeordnete zweite Trocknungsvorrichtung,
e) mindestens eine in Verarbeitungsrichtung hinter der zweiten Trocknungsvorrichtung angeordnete dritte Doppelauftragsvorrichtung,
f) mindestens eine in Verarbeitungsrichtung hinter der mindestens einen dritten Doppelauftragsvorrichtung angeordnete dritte Trocknungsvorrichtung und
g) eine Kurztakt-Presse,
   wobei jede Doppelauftragsvorrichtung eine obere Auftragsvorrichtung zum Auftragen einer Harzschicht auf die Oberseite der Holzwerkstoffplatte und eine untere Auftragsvorrichtung zum Auftragen einer Harzschicht auf die Unterseite der Holzwerkstoffplatte umfasst und jede obere Auftragsvorrichtung und jede untere Auftragsvorrichtung jeweils einen Mischbehälter aufweist, in den das jeweils aufzubringende Harz mit mindestens einem Zusatz mischbar ist.

In eine derartige Vorrichtung werden die mit dem Dekor versehenen zu Veredelnden Holzwerkstoffplatten eingebracht. In den mindestens drei Doppelauftragsvorrichtungen werden Ober- und Unterseite der Holzwerkstoffplatte gleichzeitig mit einer Harzschicht beschichtet. Dies verkürzt die Produktionszeit und verringert somit die Herstellungskosten. Durch die nach den Doppelauftragsvorrichtungen vorgesehenen Trocknungsvorrichtungen, in denen die soeben beschichteten Holzwerkstoffplatten auf die gewünschte Restfeuchte, beispielsweise durch Heißluft, heruntergetrocknet werden, wird das Aufbringen der jeweils ersten Harzschicht schnell ermöglicht und der Vernetzungsprozess der aufgebrachten Harzschichten frühzeitig unterbunden. Ein Zwischenlagern der beschichteten Holzwerkstoffplatten zum Trocknen der Harzschichten oder ein Wenden der Holzwerkstoffplatten um auch die andere Seite zu Beschichten ist nicht mehr nötig.

Dadurch, dass sowohl jede obere Auftragsvorrichtung und jede untere Auftragsvorrichtung einen Mischbehälter aufweist, in den das jeweils aufzubringende Harz mit den gewünschten Zusätzen mischbar ist, kann insbesondere schnell zwischen unterschiedlichen Produktanforderungen, beispielsweise der gewünschten Abriebklasse, hin und her geregelt werden. Ein langwieriges Umrüsten bzw. die Vorhaltung großer Mengen verschiedener Harz-Zusatzstoff-Mischungen, entfällt. Dadurch werden sowohl die vorzuhaltenden Materialmengen als auch der Platzbedarf der Anlage deutlich reduziert. Gleichzeitig kann auch die Anpassung unterschiedlicher Produkteigenschaften, beispielsweise Oberflächenglätte, Säure- oder Abriebfestigkeit, schnell und unkompliziert erfolgen. Zudem ist auch die Verwendung hochreaktiver Harzgemische möglich, da keine Zwischenlagerung der beschichteten Holzwerkstoffplatten mehr nötig ist sondern eine kontinuierliche Bearbeitung erfolgt. Dadurch werden auch die Taktzeiten der Kurztakt-Presse deutlich verkürzt, wodurch wieder die Herstellungskosten gesenkt werden.

Eine erfindungsgemäße Vorrichtung weist vorzugsweise eine Vorratsbatterie mit mehreren Vorratsbehältern, in denen das aufzubringende Harz und die Zusätze getrennt voneinander lagerbar sind, und Zuleitungen von den Vorratsbehältern zu den Mischbehältern auf. Dadurch können das Harz und die Zusätze getrennt voneinander in die Mischbehälter geleitet werden und erst dort zu der gewünschten aufzutragenden Harzschicht gemischt werden.

Die Vorrichtung kann insbesondere eine Steuerung aufweisen, die eingerichtet ist, die Menge des durch die Zuleitungen in die Mischbehälter geleiteten Harzes und der Zusätze zu steuern. Damit ist eine automatische Anpassung verschiedener Produkteigenschaften und Auftragsmengen bzw. Zusätzen möglich.

Jede obere Auftragsvorrichtung und jede untere Auftragsvorrichtung kann dabei ein Auftragswalzwerk sein. Dadurch wird eine konstante und fein einstellbare Schichtdicke gewährleistet. Zudem werden auf diesem Wege die aufgebrachten Schichten sehr homogen und gleichmäßig aufgebracht.

Um den Inhalt der Mischbehälter zu den jeweiligen oberen und unteren Auftragsvorrichtungen zu pumpen, können Schlauchpumpen vorgesehen sein. Dadurch erhöht sich die Standzeit der Vorrichtung um das bis zu 20-fache im Vergleich zur Verwendung von Membranpumpen. Zudem können die Schläuche der Schlauchpumpen bei Bedarf durch ein Schnellwechselsystem einfach und schnell ausgetauscht werden, wodurch die Wartungs- und Reparaturzeiten der Vorrichtung deutlich reduziert werden.

Vor jeder Doppelauftragsvorrichtung kann vorzugsweise mindestens ein Niederhalter für die Holzwerkstoffplatte angeordnet sein. Dadurch können gegebenenfalls während der Produktion auftretende Verformungen der Holzwerkstoffplatte behoben werden und die zu beschichtende Holzwerkstoffplatte der jeweiligen Doppelauftragsvorrichtung präzise und reproduzierbar zugeführt werden.

Zum Transport der Holzwerkstoffplatten innerhalb der Vorrichtung wird eine Spitzlaschentransporteinrichtung, in Form von Spitzlaschentransportketten, verwendet, die selbst robust und störunanfällig sind und eine hohe Oberflächenqualität der beschichteten Holzwerkstoffplatte sichern. Die Spitzlaschen können mittels Reinigungsbürsten automatisch gereinigt werden.

Die Übergabe einer Holzwerkstoffplatte von einer Doppelauftragsvorrichtung auf die Transportkette und umgekehrt erfolgt dabei mittels Rollenscheiben. Beim Einlauf in eine Doppelauftragsvorrichtung oder eine Trocknungsvorrichtung werden zusätzlich die bereits beschriebenen Niederhalter in Form von Rollenscheiben verwendet.

Zusätzlich kann eine Vorrichtung zum Veredeln einer Holzwerkstoffplatte weitere Doppelauftragsvorrichtungen aufweisen, mit denen die Gesamtschichtdicke sowie die Anzahl und die Anteile der Funktionszusätze erhöht werden können. Damit lassen sich auch Produkte erzeugen, die in höheren Nutzungsklassen deklariert werden können. Gleiches gilt für das erfindungsgemäße Verfahren, bei dem ebenfalls mehr als drei Harzschichten auf die Ober- und Unterseite der zu beschichtenden Holzwerkstoffplatte aufgebracht werden können.

Wird für die Steuerung einer hier beschriebenen Vorrichtung eine elektrische, insbesondere computergestützte, Steuerung verwendet, ist es möglich, eine hohe Reproduzierbarkeit der aufgebrachten Harzschichten zu erreichen, da sowohl die Mischungsanteile von Harz und Zusätzen als auch die Temperaturregeleinrichtungen beispielsweise der Trocknungsvorrichtungen und der Kurztakt-Presse automatisch gesteuert werden. Dadurch ist ein hoher Qualitätsstandard der so hergestellten Produkte erreichbar. Zudem können unterschiedliche Krümmungszustände der zu beschichtenden Holzwerkstoffplatte, die beispielsweise durch das Aufbringen der verschiedenen Grundierungs- und Dekorschichten entstehen können, automatisch durch eine Regelung der Auftragsmengen auf der Ober- und/oder Unterseite ausgeglichen werden. Anhand einer Zeichnung soll nun ein Ausführungsbeispiel der erfindungsgemäßen Vorrichtung näher erläutert werden. Es zeigen:
- Figur 1 -: eine schematische Draufsicht auf ein Ausführungsbeispiel einer erfindungsgemäßen Vorrichtung,
- Figur 2 -: eine schematische Draufsicht auf eine Doppelauftragsvorrichtung und
- Figur 3 -: den Schnitt entlang der Linie A-A nach Figur 2.

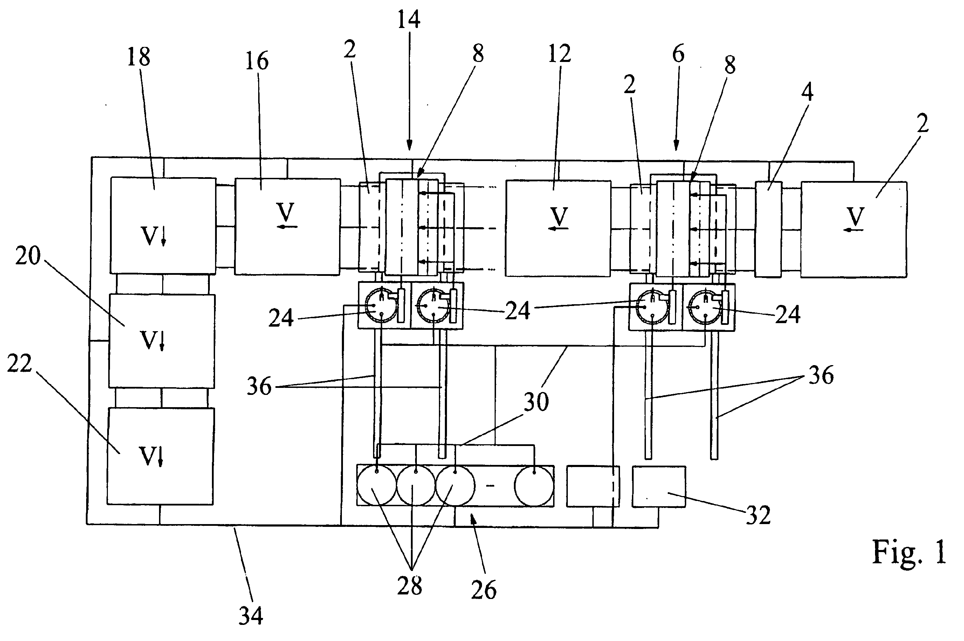

Figur 1 zeigt eine erfindungsgemäße Vorrichtung in einer schematischen Draufsicht. Die zu veredelnden Holzwerkstoffplatten 2 werden in Figur 1 von oben rechts in die Vorrichtung eingebracht. Zunächst werden in einer Reinigungsvorrichtung 4 Ober- und Unterseite der Holzwerkstoffplatten 2 gereinigt. Anschließend werden die Holzwerkstoffplatten 2 der ersten Doppelauftragsvorrichtung 6 zugeführt. Die erste Doppelauftragsvorrichtung 6 weist eine obere Auftragsvorrichtung 8 und eine untere Auftragsvorrichtung 10 auf, die im gezeigten Ausführungsbeispiel als Auftragswalzwerke ausgebildet sind. In diesen Auftragswalzwerken wird auf die Oberseite und auf die Unterseite der zu beschichtenden Holzwerkstoffplatte eine Harzschicht aufgebracht.

Nachdem die Holzwerkstoffplatten 2 die erste Doppelauftragsvorrichtung 6 durchlaufen haben, erreichen sie die erste Trocknungsvorrichtung 12. Hier werden die in der ersten Doppelauftragsvorrichtung 6 aufgebrachten Harzschichten auf eine Restfeuchte von 3 % bis 6 % heruntergetrocknet.

Auf die Darstellung einer zweiten Doppelauftragsvorrichtung und einer zweiten Trocknungsvorrichtung wurde in Figur 1 aus Platzgründen und aus Gründen der Übersichtlichkeit verzichtet. Diese schließen sich in Verarbeitungsrichtung V, die in Figur 1 durch kleine Pfeile angedeutet ist, an die erste Trocknungsvorrichtung 12 an.

In Figur 1 schließt sich in Verarbeitungsrichtung V eine dritte Doppelauftragsvorrichtung 14 an. Diese ist identisch zur ersten Doppelauftragsvorrichtung 6 ausgebildet. Nachdem die Holzwerkstoffplatten 2 die dritte Doppelauftragsvorrichtung 14 durchlaufen haben, werden in einer dritten Trocknungsvorrichtung 16 die in der dritten Doppelauftragsvorrichtung 14 aufgebrachten Harzschichten auf eine Restfeuchte von 3 % bis 6 % heruntergetrocknet. Anschließend durchlaufen die Holzwerkstoffplatten die in Figur 1 lediglich als Vierecke angedeuteten Verarbeitungsstationen des Zwischenstapelns 18, des Verpressens in einer Kurztakt-Presse 20 sowie eine Qualitätskontrolle 22.

Sowohl die erste Doppelauftragsvorrichtung 6 als auch die zweite Doppelauftragsvorrichtung 14 verfügen jeweils über zwei Mischbehälter 24, von denen jeweils einer der oberen Auftragsvorrichtungen 8 und einer der unteren Auftragsvorrichtung 10 zugeordnet ist. In diesen Mischbehältern 24 wird das in den jeweiligen Auftragsvorrichtungen 8, 10 aufzubringende Harz mit den gewünschten Zusätzen vermischt.

Diese Zutaten sind in einer Vorratsbatterie 26 in verschiedenen Vorratsbehältern 28 getrennt voneinander gelagert. Jeder dieser Vorratsbehälter 28 ist über eine Zuleitung 30 mit den Mischbehältern 24 verbunden. Über diese Zuleitungen 30 werden die gewünschten Zutaten zu den Mischbehältern 24 geleitet. Die Menge der einzelnen Zutaten wird in Figur 1 durch eine elektrische Steuerung 32, die über Steuerleitungen 34 sowohl mit der Vorratsbatterie 26 als auch mit den Mischbehältern 24 verbunden ist, gesteuert. Dadurch wird ein hoher Qualitätsstandard und eine große Reproduzierbarkeit der aufgebrachten Harzschichten erreicht.

In Figur 1 sind sowohl die erste Doppelauftragsvorrichtung 6 als auch die dritte Doppelauftragsvorrichtung 14 auf Schienen 36 gelagert. Gleiches gilt für alle nicht gezeigte Doppelauftragsvortichtungen. Auf diese Weise können sie zur Wartung oder Reparatur oder wenn sie für den gewünschten Schichtaufbau nicht benötigt werden leicht aus der Produktionsstraße heraus- und später wieder hinein bewegt werden.

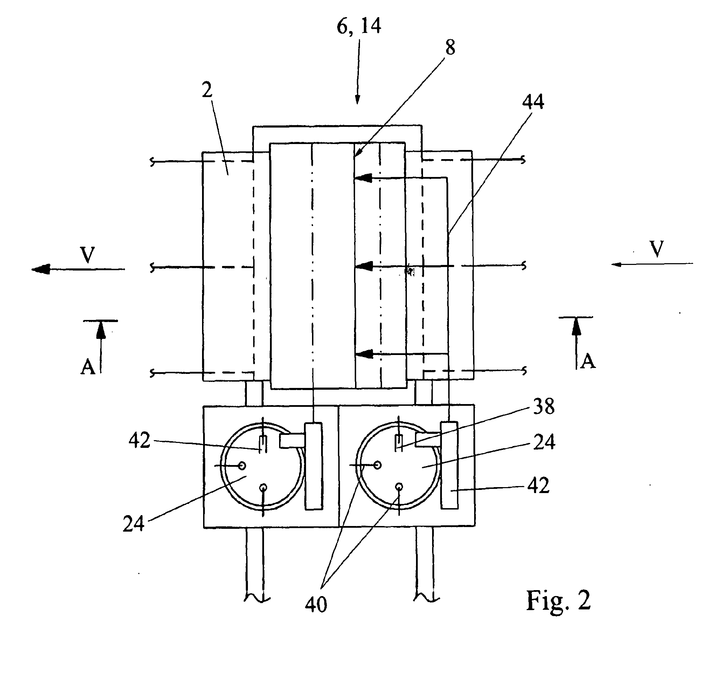

Figur 2 zeigt eine schematische Draufsicht auf eine der in Figur 1 gezeigten Doppelauftragsvorrichtungen 6, 14. Die Holzwerkstoffplatte 2 wird in Verarbeitungsrichtung V der Doppelauftragsvorrichtung 6, 14 zugeführt. Die gezeigte Doppelauftragsvorrichtung 6, 14 weist eine obere Auftragsvorrichtung 8 auf, die in Figur 2 als Auftragswalzwerk ausgebildet ist. Gleiches gilt für die untere Auftragsvorrichtung 10, die in Figur 2 wie bereits in Figur 1 nicht dargestellt ist. Die Doppelauftragsvorrichtung 6, 14 in Figur 2 weist zwei Mischbehälter 24 auf, von denen der rechte der oberen Auftragsvorrichtung 8 zugeordnet ist. In ihm wird das für die obere Auftragsvorrichtung 8 gewünschte Kunstharz-Zusatzstoff-Gemisch durch eine Rührvorrichtung 38 hergestellt. Über nicht gezeigte Zuleitungen werden die Zutaten für dieses Gemisch aus den Vorratsbehältern 28 der Vorratsbatterie 26 in Figur 1 dem Mischbehälter 24 zugeführt. Dabei werden sowohl der Füllstand als auch die Temperatur des Gemisches über Sensoren 40 erfasst. Das im rechten Mischbehälter 24 gemischte Material wird über eine Schlauchpumpe 42 über Materialzuleitungen 44 der oberen Auftragsvorrichtung 8 zugeführt.

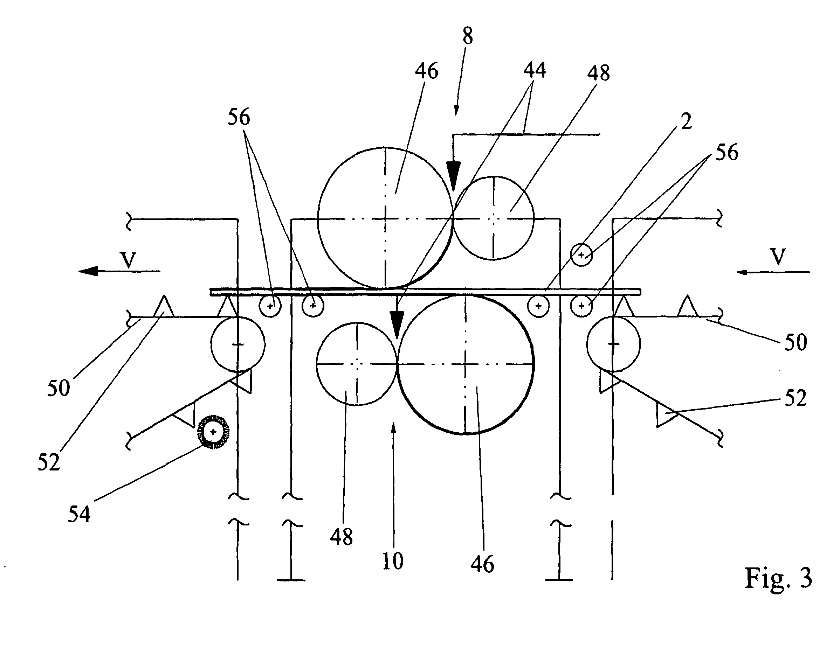

Figur 3 zeigt einen Schnitt entlang der Linie A-A nach Figur 2. Die obere Auftragsvorrichtung 8 und die untere Auftragsvorrichtung 10 ist jeweils als Auftragswalzwerk ausgebildet, das jeweils über eine Auftragswalze 46 und eine Dosierwalze 48 verfügt. Entlang der Materialzuleitungen 44, die in Figur 3 wie in Figur 2 mit einem Pfeil am Ende versehen sind, wird das in den Mischbehältern 24 gemischte aufzubringende Material zwischen die Auftragswalze 46 und die Dosierwalze 48 eingebracht. Durch die Auftragswalze 46 wird es auf die Oberseite bzw. Unterseite der eingebrachten Holzwerkstoffplatte 2 aufgebracht. Der Transport der Holzwerkstoffplatte 2 geschieht sowohl vor als auch hinter der gezeigten Doppelauftragsvorrichtung 6, 14 über eine so genannte Spitzlaschentransporteinrichtung 50. Dadurch, dass diese Einrichtung 50 nur sehr wenige sehr kleinflächige Berührungspunkte mit der Holzwerkstoffplatte 2 hat, wird eine gute Qualität der bereits beschichteten Holzwerkstoffplatte gewährleistet. Die einzelnen Spitzlaschen 52 werden über automatische Reinigungsbürsten 54 gereinigt.

Um eine reproduzierbare und genaue Zuführung der Holzwerkstoffplatte 2 in die Auftragsvorrichtung 6, 14 zu gewährleisten, können vor und hinter den jeweiligen Auftragsvorrichtungen 8, 10 Niederhalter 56 angeordnet sein.

Auf diese Weise ist gewährleistet, dass die Schichten auf der Ober- und Unterseite der Holzwerkstoffplatte 2 reproduzierbar und präzise aufgebracht werden können.

Die in den Figuren 1 bis 3 nicht gezeigten weiteren Doppelauftragsvorrichtungen sind baugleich ausgebildet. Über die in Figur 1 gezeigten Schienen 36 können sie einfach und ohne großen Aufwand in die Produktionsstraße eingebracht bzw. aus ihr heraus gefahren werden. Auch dadurch ist eine einfache und schnelle Umrüstung der Vorrichtung auf die Veredlung von Holzwerkstoffplatten mit anderem Schichtaufbau möglich.

### Bezugszeichenliste

- 2: Holzwerkstoffplatten
- 4: Reinigungsvorrichtung
- 6: erste Doppelauftragsvorrichtung
- 8: obere Auftragsvorrichtung
- 10: untere Auftragsvorrichtung
- 12: erste Trocknungsvorrichtung
- 14: dritte Doppelauftragsvorrichtung
- 16: dritte Trocknungsvorrichtung
- 18: Zwischenstapeln
- 20: Kurztakt-Presse
- 22: Qualitätskontrolle
- 24: Mischbehälter
- 26: Vorratsbatterie
- 28: Vorratsbehälter
- 30: Zuleitung
- 32: elektrische Steuerung
- 34: Steuerleitung
- 36: Schienen
- 38: Rührvorrichtung
- 40: Sensoren
- 42: Schlauchpumpe
- 44: Materialzuleitung
- 46: Auftragswalze
- 48: Dosierwalze
- 50: Spitzlaschentransporteinrichtung
- 52: Spitzlasche
- 54: Reinigungsbürste
- 56: Niederhalter
- V: Verarbeitungsrichtung

## Patentansprüche

1. Verfahren zum Veredeln einer Holzwerkstoffplatte (2), die an mindestens einer Oberseite und/oder einer Unterseite ein Dekor aufweist, das die folgenden Schritte umfasst:
(a) Reinigen der Oberseite und der Unterseite der Holzwerkstoffplatte (2),
(b) Aufbringen einer ersten oberen Harzschicht, die Korundpartikel enthält, auf die Oberseite und einer ersten unteren Harzschicht auf die Unterseite der Holzwerkstoffplatte (2),
(c) Trocknen der ersten oberen Harzschicht und der ersten unteren Harzschicht auf eine Restfeuchte von 3 % bis 6 %,
(d) Aufbringen einer zweiten oberen Harzschicht, die Zellulose enthält, auf die Oberseite und einer zweiten unteren Harzschicht auf die Unterseite der Holzwerkstoffplatte (2),
(e) Trocknen der zweiten oberen Harzschicht und der zweiten unteren Harzschicht auf eine Restfeuchte von 3 % bis 6 %,
(f) Aufbringen einer mindestens dritten oberen Harzschicht, die Glaspartikel enthält, auf die Oberseite und einer mindestens dritten unteren Harzschicht auf die Unterseite der Holzwerkstoffplatte (2),
(g) Trocknen der dritten oberen Harzschicht und der dritten unteren Harzschicht auf eine Restfeuchte von 3 % bis 6 %,
(h) Verpressen des Schichtaufbaus unter Druck- und Temperatureinfluss.

2. Verfahren nach Anspruch 1, **dadurch gekennzeichnet, dass** die dritte obere Harzschicht etwa 20 % Glas enthält.

3. Verfahren nach Anspruch 1 oder 2, **dadurch gekennzeichnet, dass** die zweite obere Harzschicht etwa 5 % Zellulose enthält.

4. Verfahren nach Anspruch 1, 2 oder 3, **dadurch gekennzeichnet, dass** die erste obere Harzschicht ca. 20 % Korundpartikel enthält.

5. Verfahren nach einem der vorstehenden Ansprüche, **dadurch gekennzeichnet, dass** die oberen Harzschichten und die unteren Harzschichten in einer Menge von 20 bis 50 g/m² aufgetragen werden.

6. Verfahren nach einem der vorstehenden Ansprüche, **dadurch gekennzeichnet, dass** die oberen Harzschichten und die unteren Harzschichten eine 60%ige Kunstharzlösung enthalten.

7. Verfahren nach einem der vorstehenden Ansprüche, **dadurch gekennzeichnet, dass** unter dem Dekor der zu veredelnden Holzwerkstoffplatte (2) ein Primer und eine Grundierung aufgetragen wurde und das Dekor auf die Grundierung aufgedruckt und mit einer Abdeckung abgedeckt wurde.

8. Verfahren nach einem der Ansprüche 1 bis 6, **dadurch gekennzeichnet, dass** das Dekor in Form einer aufkaschierten Dekorpapierschicht auf die Holzwerkstoffplatte (2) aufgebracht wurde.

9. Vorrichtung zum Veredeln einer Holzwerkstoffplatte (2), wobei mindestens eine Oberseite und/oder eine Unterseite der Holzwerkstoffplatte (2) ein Dekor aufweist, mit
(a) einer ersten Doppelauftragsvorrichtung (6),
(b) einer in einer Verarbeitungsrichtung (V) hinter der ersten Doppelauftragsvorrichtung (6) angeordneten ersten Trocknungsvorrichtung (12),
(c) einer in Verarbeitungsrichtung (V) hinter der ersten Trocknungsvorrichtung (12) angeordneten zweiten Doppelauftragsvorrichtung,
(d) einer in Verarbeitungsrichtung (V) hinter der zweiten Doppelauftragsvorrichtung angeordneten zweiten Trocknungsvorrichtung,
(e) mindestens einer in Verarbeitungsrichtung (V) hinter der zweiten Trocknungsvorrichtung angeordneten dritten Doppelauftragsvorrichtung (14),
(f) mindestens einer in Verarbeitungsrichtung (V) hinter der mindestens einen dritten Doppelauftragsvorrichtung (14) angeordneten dritten Trocknungsvorrichtung (16) und
(g) einer Kurztakt-Presse (20),
wobei jede Doppelauftragsvorrichtung eine obere Auftragsvorrichtung (8) zum Auftragen einer Harzschicht auf die Oberseite der Holzwerkstoffplatte (2) und eine untere Auftragsvorrichtung (10) zum Auftragen einer Harzschicht auf die Unterseite der Holzwerkstoffplatte (2) umfasst und jede obere Auftragsvorrichtung (8) und jede untere Auftragsvorrichtung (10) jeweils einen Mischbehälter (24) aufweist, in dem das jeweils aufzubringende Harz mit mindestens einem Zusatz mischbar ist.

10. Vorrichtung nach Anspruch 9, **gekennzeichnet durch** eine Vorratsbatterie (26) mit mehreren Vorratsbehältern (28), in denen das aufzubringende Harz und die Zusätze getrennt voneinander lagerbar sind, und Zuleitungen (30) von den Vorratsbehältern (28) zu den Mischbehältern (24).

11. Vorrichtung nach Anspruch 10, **gekennzeichnet durch** eine Steuerung (32), die eingerichtet ist, die Menge des **durch** die Zuleitungen (30) in die Mischbehälter (24) geleiteten Harzes und der Zusätze zu steuern.

12. Vorrichtung nach einem der Ansprüche 9 bis 11, **dadurch gekennzeichnet, dass** jede obere Auftragsvorrichtung (8) und jede untere Auftragsvorrichtung (10) ein Auftragswalzwerk ist.

13. Vorrichtung nach einem der Ansprüche 9 bis 12, **gekennzeichnet durch** Schlauchpumpen (42) zum Pumpen des Inhalts der Mischbehälter (24) zu den jeweiligen oberen Auftragsvorrichtungen (8) und unteren Auftragsvorrichtungen (10).

14. Vorrichtung nach einem der Ansprüche 9 bis 13, **dadurch gekennzeichnet, dass** vor jeder Doppelauftragsvorrichtung mindestens ein Niederhalter (56) für die Holzwerkstoffplatte (2) angeordnet ist.

## Claims

1. Method for finishing an engineered wood board (2) comprising a decor on at least the top and/or the bottom, which method comprises the following steps:
(a) cleaning the top and bottom of the engineered wood board (2),
(b) applying a first top resin layer, which contains corundum particles, to the top and a first bottom resin layer to the bottom of the engineered wood board (2),
(c) drying the first top resin layer and the first bottom resin layer to a residual moisture content of 3% to 6%,
(d) applying a second top resin layer, which contains cellulose, to the top and a second bottom resin layer to the bottom of the engineered wood board (2),
(e) drying the second top resin layer and the second bottom resin layer to a residual moisture content of 3% to 6%,
(f) applying an at least third top resin layer, which contains glass particles, to the top and an at least third bottom resin layer to the bottom of the engineered wood board (2),
(g) drying the third top resin layer and the third bottom resin layer to a residual moisture content of 3% to 6%,
(h) pressing the multilayer structure under the action of pressure and heat.

2. Method according to Claim 1, **characterized in that** the third top resin layer contains around 20% glass.

3. Method according to Claim 1 or Claim 2, **characterized in that** the second top resin layer contains around 5% cellulose.

4. Method according to Claim 1, 2 or 3, **characterized in that** the first top resin layer contains around 20% corundum particles.

5. Method according to one of the preceding claims, **characterized in that** the top resin layers and the bottom resin layers are applied in an amount of 20 to 50 g/m².

6. Method according to one of the preceding claims, **characterized in that** the top resin layers and the bottom resin layers contain a 60% synthetic resin solution.

7. Method according to one of the preceding claims, **characterized in that** a primer and an undercoat are applied under the decor of the engineered wood board (2) to be finished and the decor is printed onto the undercoat and covered with a covering.

8. Method according to one of Claims 1 to 6, **characterized in that** the decor was applied to the engineered wood board (2) by lamination in the form of a decorative paper layer.

9. Device for finishing an engineered wood board (2), at least a top and/or a bottom of the engineered wood board (2) comprising a decor, having
(a) a first double-sided application device (6),
(b) a first drying device (12) arranged downstream of the first double-sided application device (6) in a processing direction (V),
(c) a second double-sided application device arranged downstream of the first drying device (12) in the processing direction (V),
(d) a second drying device arranged downstream of the second double-sided application device in the processing direction (V),
(e) at least one third double-sided application device (14) arranged downstream of the second drying device in the processing direction (V),
(f) at least one third drying device (16) arranged downstream of the at least one third double-sided application device (14) in the processing direction (V) and
(g) a short-cycle press (20),
each double-sided application device comprising a top application device (8) for applying a resin layer to the top of the engineered wood board (2) and a bottom application device (10) for applying a resin layer to the bottom of the engineered wood board (2) and each top application device (8) and each bottom application device (10) in each case comprising a mixing vessel (24), in which the resin to be applied in each case may be mixed with at least one additive.

10. Device according to Claim 9, **characterized by** a storage magazine (26) with a plurality of storage vessels (28), in which the resin to be applied and the additives may be stored separately from one another, and feed lines (30) from the storage vessels (28) to the mixing vessels (24).

11. Device according to Claim 10, **characterized by** a controller (32), which is designed to control the amount of resin and of additives conveyed by the feed lines (30) into the mixing vessels (24).

12. Device according to one of Claims 9 to 11, **characterized in that** each top application device (8) and each bottom application device (10) is an application roller set.

13. Device according to one of Claims 9 to 12, **characterized by** peristaltic pumps (42) for pumping the contents of the mixing vessels (24) to the respective top application devices (8) and bottom application devices (10).

14. Device according to one of Claims 9 to 13, **characterized in that** at least one hold-down member (56) for the engineered wood board (2) is arranged upstream of each double-sided application device.

## Revendications

1. Procédé pour la finition d'une plaque en matériau dérivé du bois (2) qui présente un décor sur un côté supérieur et/ou sur un côté inférieur, comprenant les étapes suivantes :
(a) nettoyer le côté supérieur et le côté inférieur de la plaque en matériau dérivé du bois (2),
(b) appliquer une première couche supérieure de résine, contenant des particules de corindon, sur le côté supérieur et une première couche inférieure de résine sur le côté inférieur de la plaque en matériau dérivé du bois (2),
(c) sécher la première couche supérieure de résine et la première couche inférieure de résine jusqu'à une humidité résiduelle de 3% à 6%,
(d) appliquer une deuxième couche supérieure de résine, contenant de la cellulose, sur le côté supérieur et une deuxième couche inférieure de résine sur le côté inférieur de la plaque en matériau dérivé du bois (2),
(e) sécher la deuxième couche supérieure de résine et la deuxième couche inférieure de résine jusqu'à une humidité résiduelle de 3% à 6%,
(f) appliquer une au moins troisième couche supérieure de résine, contenant des particules de verre, sur le côté supérieur et une au moins troisième couche inférieure de résine sur le côté inférieur de la plaque en matériau dérivé du bois (2),
(g) sécher la troisième couche supérieure de résine et la troisième couche inférieure de résine jusqu'à une humidité résiduelle de 3% à 6%,
(h) presser l'ensemble de couches sous influence de pression et de température.

2. Procédé selon la revendication 1, **caractérisé en ce que** la troisième couche supérieure de résine contient environ 20 % de verre.

3. Procédé selon la revendication 1 ou 2, **caractérisé en ce que** la deuxième couche supérieure de résine contient environ 5 % de cellulose.

4. Procédé selon la revendication 1, 2 ou 3, **caractérisé en ce que** la première couche supérieure de résine contient environ 20 % de particules de corindon.

5. Procédé selon l'une des revendications précédentes, **caractérisé en ce que** les couches supérieures de résine et les couches inférieures de résine sont appliquées en quantité de 20 à 50 g/m2.

6. Procédé selon l'une des revendications précédentes, **caractérisé en ce que** les couches supérieures de résine et les couches inférieures de résine contiennent une solution de résine synthétique à 60 %.

7. Procédé selon l'une des revendications précédentes, **caractérisé en ce que** sous le décor de la plaque en matériau dérivé du bois à finir a été appliqué un apprêt et une sous-couche et le décor a été pressé sur la sous-couche et revêtu d'un revêtement.

8. Procédé selon l'une des revendications 1 à 6, **caractérisé en ce que** le décor a été posé sur la plaque en matériau dérivé du bois (2) sous la forme d'une couche de papier décor contrecollée.

9. Dispositif pour la finition d'une plaque en matériau dérivé du bois (2), au moins un côté supérieur et/ou un côté inférieur de la plaque en matériau dérivé du bois présentant un décor, comprenant :
(a) un premier dispositif de double application (6),
(b) un premier dispositif de séchage (12) disposé derrière le premier dispositif de double application relativement à une direction de traitement (V)
(c) un deuxième dispositif de double application disposé derrière le premier dispositif de séchage (12) relativement à la direction de traitement (V),
(d) un deuxième dispositif de séchage disposé derrière le deuxième dispositif de double application relativement à la direction de traitement (V)
(e) au moins un troisième dispositif de double application (14) disposé derrière le deuxième dispositif de séchage relativement à la direction de traitement (V),
(f) au moins un troisième dispositif de séchage (16) disposé derrière l'au moins un troisième dispositif de double application (14) relativement à la direction de traitement (V), et
(g) une presse à cadence rapide (20),
chaque dispositif de double application comprenant un dispositif d'application supérieur (8) pour l'application d'une couche de résine sur le côté supérieur de la plaque en matériau dérivé du bois (2) et un dispositif d'application inférieur (10) pour l'application d'une couche de résine sur le côté inférieur de la plaque en matériau dérivé du bois (2), et chaque dispositif d'application supérieur (8) et chaque dispositif d'application inférieur (10) présente un récipient de mélange (24) dans lequel la résine respective à applique peut être mélangée avec au moins un additif.

10. Dispositif selon la revendication 9, **caractérisé par** une batterie d'approvisionnement (26) comprenant plusieurs récipients d'approvisionnement (28) dans lesquels on peut stocker séparément les uns des autres la résine à appliquer et les additifs, et par des conduits d'acheminement allant des récipients d'approvisionnement (28) aux récipients de mélange (24).

11. Dispositif selon la revendication 10, **caractérisé par** un pilotage (32) agencé pour piloter la quantité de résine conduite dans les récipients de mélange (24) par les conduits d'acheminement (30), et des additifs.

12. Dispositif selon l'une des revendications 9 à 11, **caractérisé en ce que** chaque dispositif d'application supérieur (8) et chaque dispositif d'application inférieur (9) est un système à rouleau d'application.

13. Dispositif selon l'une des revendications 9 à 12, **caractérisé par** des pompes tubulaires (42) pour pomper le contenu des réservoirs de mélange (24) vers les dispositifs d'application supérieurs (8) et les dispositifs d'application inférieurs (10) respectifs.

14. Dispositif selon l'une des revendications 9 à 13, **caractérisé en ce qu'**au moins un serre-plaque (56) pour la plaque en matériau dérivé du bois (2) est disposé devant chaque dispositif de double application.
